# EUROPÄISCHE PATENTSCHRIFT

(11) **EP 1 632 329 B1**
(45) Veröffentlichungstag und Bekanntmachung des Hinweises auf die Patenterteilung: **12.11.2008**
(21) Anmeldenummer: 05014892.3
(22) Anmeldetag: 08.07.2005
(51) Int. Cl.: B29C 45/33, B29C 45/64, B29C 45/14, B29C 45/16, B29C 45/42

(54) **Spritzgiesswerkzeug und Verfahren zum Spritzen eines Abschnitts eines Formteils**
Mould and method for injection moulding a section of an object
Moule et procédé pour produire par injection une partie d'un objet

(30) Priorität: 10.07.2004 DE 102004033461
(43) Veröffentlichungstag der Anmeldung: 08.03.2006
(73) Patentinhaber: ICOS GmbH, 38228 Salzgitter (DE)
(72) Erfinder: Hans-Rudolf Kelpe, 31249 Hohenhameln (DE); Michael Müller, 31228 Peine (DE); Andreas Mühe, 31249 Hohenhameln (DE); Ernst Pichler, 30827 Garbsen (DE)
(74) Vertreter: Stoffregen, Hans-Herbert

(56) Entgegenhaltungen:
- EP-A- 1 396 329
- WO-A-20/04041506
- DE-A1- 19 936 229
- FR-A- 1 076 318
- US-A- 3 358 333
- US-A- 5 422 059
- GOETZ W: "ZUKUNFTSSICHER IN-MOULD-LABELLING IM PRAXISEINSATZ" PLASTVERARBEITER, HUETHIG GMBH, HEIDELBERG, DE, Bd. 55, Nr. 2, Februar 2004 (2004-02), Seiten 20-23, XP001046698 ISSN: 0032-1338
- VOLCKMANN K: "KRATZFEST AM KASTEN" PLASTVERARBEITER, HUETHIG GMBH, HEIDELBERG, DE, Bd. 49, Nr. 12, Dezember 1998 (1998-12), Seite 58,60, XP000937185 ISSN: 0032-1338

## Beschreibung

Die Erfindung bezieht sich auf ein Spritzgießwerkzeug mit einem Düsenteil, das zumindest zwei relativ zueinander verstellbare Formbacken umfasst, die in Spritzstellung einen Hohlraum begrenzen, in dem ein Spritzkanal mündet, sowie zumindest ein mit zumindest einer auf dem Düsenteil verstellbar angeordneten Formbacke wechselwirkendes Schließelement zum Zuhalten der Formbacken in der Spritzstellung, wobei das zumindest eine Schließelement von dem Düsenteil ausgeht und zu diesem verstellbar ausgebildet ist und das Schließelement die zumindest eine Formbacke in ihrer Spritzstellung verriegelt. Ferner nimmt die Erfindung Bezug auf ein Verfahren zum Anspritzen eines Abschnitts an ein Formteil und/oder Umspritzen eines Abschnitts eines Formteil durch Spritzgießen, wobei das Formteil abschnittsweise in einen von zueinander verstellbaren von einem Düsenteil eines Spritzgießwerkzeuges ausgehenden und relativ zueinander verstellbare Formbacken umgebenen Hohlraum eingebracht wird, in den nach Schließen der Formbacken (Spritzstellung) fließfähiges Material gespritzt wird, wobei zumindest eine der Formbacken mittels zumindest eines von dem Düsenteil ausgehenden Schließelements durch Verstellen dieses zu der zumindest einen Formbacke in ihrer Spritzstellung verriegelt wird.

Aus der EP-A-1 396 329 sind ein Verfahren und eine Anlage zum Ausbilden eines Abschnitts eines kastenförmigen Behältnisses bekannt. Das verwendete Spritzgießwerkzeug besteht dabei aus einem Düsenteil und einem Spritzteil, über das beim Spritzen die den zu spritzenden Abschnitt des kastenförmigen Behältnisses aufnehmenden Formbacken in der Spritzstellung gehalten werden, um ein Verstellen beim Spritzen auszuschließen. Die Formbacken gehen dabei vom Düsenteil aus.

Der US-A-3,358,333 ist ein Spritzgießwerkzeug zu entnehmen, mit dem Sohlen an einen Schuhschaft gespritzt werden. Hierzu erforderliche Formbacken werden über Kniehebel verstellt und fixiert, die schwenkbar vom Düsenteil des Werkzeugs ausgehen und über Zylinder betätigbar sind, die ihrerseits an den Rahmen des Gießwerkzeuges angelenkt sind.

Ein aus einem Düsenteil und einem Schließteil bestehendes Spritzgießwerkzeug ist der US-A-5,422,059 zu entnehmen. Dabei ist das Schließteil zu dem Düsenteil über einen Hydraulikzylinder verstellbar. Das Schließteil wird entlang von Holmen geführt, die vom Düsenteil ausgehen.

Ein aus Düsenteil und Schließteil bestehendes Werkzeug ist auch aus der DE-A-199 32 515 bekannt. Mit dem entsprechenden Werkzeug lassen sich Kästen mit stabilen Griffen spritzen.

Bei einem Flachenkasten aus Kunststoff nach der DE-A-40 22 884 kann auf einem Kernelement eines Griffs ein Außenelement aufgespritzt werden. Die EP-A-1 000 865 sieht ein Umspritzen eines Griffs eines Flaschenkastens vor. Gleiches ist der DE-A-102 08 845 zu entnehmen.

Um ein Spritzgussteil herzustellen, sieht die DE-A-34 46 020 einen von verstellbaren Backen begrenzten Formhohlraum vor, die derart verstellt werden, dass nacheinander unterschiedliche Materialien in den Formhohlraum gespritzt werden können.

Nach der JP-A-01072815 werden Formteile durch Spritzgießen hergestellt, wobei ein Hohlraum von Formbacken begrenzt wird, die durch Klemmen in einer Halterung zusammengehalten werden. Hierzu werden die Formbacken mittels eines Düsenteils in die Halterung hineingedrückt. Die Außenflächen der Formbacken und damit die Innenflächen der Halterung weisen einen Konusverlauf auf.

Zum Spritzgießen von Kunststoffteilen nach der JP-A-2001058339 und JP-A-08066950 werden Formbacken in ihren Randbereichen von zu den Formbacken verstellbaren ringförmigen bzw. klauenförmigen Schließteilen zusammengehalten.

Der vorliegenden Erfindung liegt das Problem zu Grunde, ein Spritzgießwerkzeug der eingangs genannten Art sowie ein Verfahren derart weiterzubilden, dass bei kompakter Bauart problemlos ein Formteil wie Kasten oder Kraftfahrzeugteil wie Radlaufschale zumindest bereichsweise umspritzt werden kann, um in diesem Bereich gewünschte Materialeigenschaften zu erzielen bzw. das Formteil in einen oder mehreren gewünschten Bereichen geometrisch zu verändern wie zu verlängern. Dabei soll sichergestellt sein, dass die Formbacken beim Spritzen selbsthemmend fixiert sind.

Das Problem wird durch die Merkmale des Spritzgießwerkzeugs des Anspruchs 1 und des Verfahrens des Anspruchs 6 gelöst.

Erfindungsgemäß wird das Problem im Wesentlichen dadurch gelöst, dass zum Öffnen bzw. Schließen des Formhohlraums zumindest die eine Formbacke mit dem zumindest einen Schließelement in Form eines Verrlegelungskeils wechselwirkt und die Formbacke und der Verriegelungskeil über geneigt zum Verstellweg des Verriegelungskeils verlaufende strukturierte Flächen sägezahnförmiger Geometrie in Schließstellung kraft- und formschlüssig verbunden sind.

Es wird ein Spritzgießwerkzeug weitergebildet, bei dem kein gesondertes zu dem Düsenteil verstellbares Schließteil erforderlich ist, um die Formbacken während des Spritzens zu sichern, also zuzuhalten. Somit ist das Düsenteil während des Spritzens von einem Schließteil nicht abgedeckt, so dass problemlos ein Abschnitt des Formteils umspritzt bzw. ein Abschnitt an das Formteil angespritzt werden kann. Bei dem Formteil kann es sich z. B. um einen Kasten oder ein Kraftfahrzeugteil wie Radlaufschale oder einen Unterboden handeln, so dass das Formteil in erheblichem Umfang aus dem Werkzeug vorsteht, eine Möglichkeit, die klassische Spritzgießwerkzeuge nicht bieten, bei denen die von dem Düsenteil ausgehenden Formbacken über ein gesondertes zu den Formbacken verstellbares Düsenteil verriegelt werden. Zum Entfernen des hergestellten Spritzgussteils muss das Schließteil zu dem Düsenteil in einem Umfang beabstandet werden, dass das Formteil aus dem Zwischenraum zwischen Düsenteil und Schließteil entfernt werden kann. Hierzu müssen Düsenteil und Schließteil axial derart zueinander beabstandet werden, dass der lichte Abstand größer als Erstreckung des Spritzgussteils in axialer Richtung ist.

Von dem Düsenteil geht das zum Zuhalten des bzw. der Formbacken erforderliche verstellbare Schließelement aus, so dass ein überaus kompaktes Spritzgießwerkzeug zur Verfügung gestellt wird, das folglich ohne großen maschinellen Aufwand dort zum Einsatz gelangen kann, wo z. B. ein Abschnitt eines Formteils wie Kastens umspritzt werden soll. Insbesondere besteht erwähntermaßen der Vorteil, dass das zu umspritzende bzw. anzuspritzende Formteil in erheblichem Umfang über das Düsenteil vorstehen kann.

Selbstverständlich beschränkt sich die erfindungsgemäße Lehre nicht allein auf ein Spritzgießwerkzeug, mit dem ein Formteil bzw. ein Abschnitt eines solchen umspritzt bzw. ein Abschnitt aufgespritzt werden kann. Vielmehr ist die Lehre auch prinzipiell zum Spritzen von Formteilen an sich geeignet.

Erfindungsgemäß ist vorgesehen, dass die Formbacke mit zumindest einem Schließelement in Form eines Verriegelungskeils wechselwirkt, wobei die Formbacke und der Verriegelungskeil in Schließstellung über geneigt zum Verstellweg des Verriegelungskeils verlaufende strukturierte Flächen kraft- und formschlüssig verbunden sind, um auf diese Weise die Selbsthemmung zu realisieren. Dabei weisen die aufeinander liegenden Flächen insbesondere eine sägezahnförmige Geometrie auf.

Vorzugsweise weist die Fläche mehrere zumindest einen ersten, einen zweiten und einen dritten Abschnitt umfassende Bereiche auf, wobei sich der erste Abschnitt quer zum Verstellweg des Verriegelungskeils, der zweite Abschnitt sich in Richtung des Verstellwegs des Verriegelungskeils und der die Abschnitte verbindende dritte Abschnitt entlang von von der strukturierten Fläche aufgespannter Ebene erstrecken. Durch eine diesbezügliche Geometrie ist sichergestellt, dass in der Schließstellung die aufeinander liegenden Flächen von Formbacke und Verriegelungskeil derart zueinander abgestützt sind, dass die erforderliche Selbsthemmung mit der Folge auftritt, dass beim Spritzen ein Auseinanderbewegen der Formbacken ausgeschlossen ist.

Dabei kann die Reihenfolge der Abschnitte auch voneinander abweichen. Ferner verlaufen die ersten und dritten Abschnitte der aufeinander liegenden Flächen von Verriegelungskeil und Formbacke stets zueinander beabstandet.

Verlaufen die zweiten Abschnitte der die sägezahnförmige Geometrie bildenden Bereiche der sich aufeinander abstützenden Flächen von Formbacke und Verriegelungskeil vorzugsweise parallel zum Verstellweg des Verriegelungskeils, so kann der zweite Abschnitt auch zum Verstellweg einen Winkel α mit insbesondere α ≤ 6°, vorzugsweise 5° ≤ α ≤ 6° einschließen.

Um über den Verriegelungskeil die Formbacken beim Öffnen des Werkzeugs mitzunehmen, ist vorgesehen, dass von dem Verriegelungskeil zumindest ein in die Formbacke eingreifender Mitnehmer ausgeht, wobei zum Entriegeln der Formbacke der Verriegelungskeil zu dieser mit Spiel verstellbar ist. Mit anderen Worten erfolgt zunächst ein Bewegen des Verriegelungskeils, um sodann die Formbacke mitzunehmen. Hierdurch ist sichergestellt, dass beim Schließen des Verriegelungskeils der erforderliche Formschluss zur Formbacke erreichbar ist.

Insbesondere geht von dem Verriegelungskeil ein entlang dessen mit der Formbacke wechselwirkender Fläche verlaufender im Schnitt T-förmiger Mitnehmer aus, dessen Querschenkel mit Spiel in eine in Längsrichtung der mit dem Verriegelungskeil wechselwirkenden Fläche verlaufende Aussparung eingreift.

Mit anderen Worten weist die Formbacke in ihrem dem Verriegelungskeil zugewandten Bereich eine im Schnitt T-förmige Aussparung auf, in die mit Spiel der T-förmigen Mitnehmer verläuft.

Der von den Formbacken umgebene Hohlraum zum Umspritzen eines Abschnitts eines Formteils ist des Weiteren derart ausgebildet, dass der Hohlraum zumindest abschnittsweise beabstandet den zu umspritzenden Abschnitt umgibt. Gegebenenfalls kann der Hohlraum auch umlaufend den Abschnitt beabstandet umgeben.

Soll ein Abschnitt an ein Formteil angespritzt werden, so ist die Erstreckung des Bereichs des Formteils innerhalb des Hohlraums, an den der Abschnitt angespritzt werden soll, häufig erheblich kleiner als der verbleibende Raum, in den das schmelzflüssige Material gespritzt wird.

Unabhängig hiervon besteht die Möglichkeit, problemlos Verstärkungen an vorhandene Formteile anzuspritzen bzw. Griffe wie Griffe von Kästen zu erneuern bzw. mit einer Oberfläche bzw. Außenschicht zu versehen, die den Tragekomfort erhöht.

Des Weiteren zeichnet sich die Erfindung durch ein Verfahren zum Anspritzen eines Abschnitts an ein Formteil und/oder Umspritzen eines Abschnitts eines Formteil durch Spritzgießen, wobei das Formteil abschnittsweise in einen von zueinander verstellbaren von einem Düsenteil eines Spritzgießwerkzeuges ausgehenden und relativ zueinander verstellbare Formbacken umgebenen Hohlraum eingebracht wird, in den nach Schließen der Formbacken (Spritzstellung) fließfähiges Material gespritzt wird, wobei zumindest eine der Formbacken mittels zumindest eines von dem Düsenteil ausgehenden Schließelements durch Verstellen dieses zu der zumindest einen Formbacke in ihrer Spritzstellung verriegelt wird, dadurch aus, dass die zumindest eine Formbacke mit dem zumindest einen Schließelement durch formschlüssiges Eingreifen des Verriegelungselementes in die Formbacke verriegelt wird.

Weitere Einzelheiten, Vorteile und Merkmale der Erfindung ergeben sich nicht nur aus den Ansprüchen, den diesen zu entnehmenden Merkmalen - für sich und/oder in Kombination - sondern auch aus der nachfolgenden Beschreibung von der Zeichnung zu entnehmenden bevorzugten Ausführungsbeispiele.

Es zeigen:
- Fig. 1: eine Seitenansicht einer Anordnung zum Umspritzen eines Abschnitts eines Formteils bzw. Anspritzen eines Abschnitts an ein Formteil,
- Fig. 2: eine Draufsicht auf eine Anlage zum Umspritzen bzw. Anspritzen von Abschnitten von bzw. an Formteilen,
- Fig. 3: einen Ausschnitt aus einer Anlage zum Umspritzen bzw. Anspritzen von Abschnitten von bzw. an Formteilen in Form von Kästen,
- Fig. 4: die Handhabungseinrichtung gemäß Fig. 3 mit auf ein Spritzgießwerkzeug ausgerichtetem Formteil,
- Fig. 5: das Formteil gemäß Fig. 4 bei in das Spritzgießwerkzeug eingebrachter Position,
- Fig. 6: das Formteil gemäß Fig. 4 und 5 nach Umspritzen bzw. Anspritzen und Entfernen aus dem Spritzgießwerkzeug.
- Fig. 7: einen Ausschnitt eines Spritzgießwerkzeuges zum Umspritzen einer Innenwandung eines Formteils,
- Fig. 8: einen Ausschnitt eines Spritzgießwerkzeuges zum Umspritzen eines Mittelhandgriffs eines Formteils,
- Fig. 9: einen Ausschnitt eines Spritzgießwerkzeuges zum Umspritzen von Außenhandgriffen eines Formteils,
- Fig. 10: einen Ausschnitt einer der erfindungsgemäßen Lehre gehorchenden Ausführungsform eines Spritzgießwerkzeuges,
- Fig. 11: einen Ausschnitt aus der Anordnung gemäß Fig. 10,
- Fig. 11a: ein Detail des Werkzeugs gemäß Fig. 10 und
- Fig. 12: eine weitere Ausführungsform einer Anordnung zum Spritzen eines Formteils sowie zum Umspritzen eines Abschnitts des Formteils.

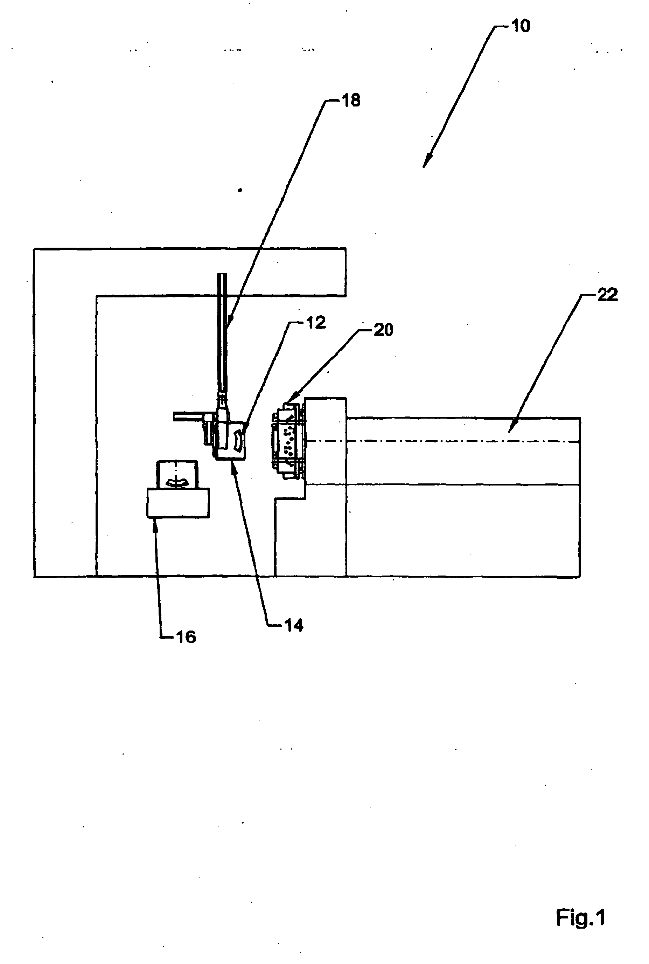

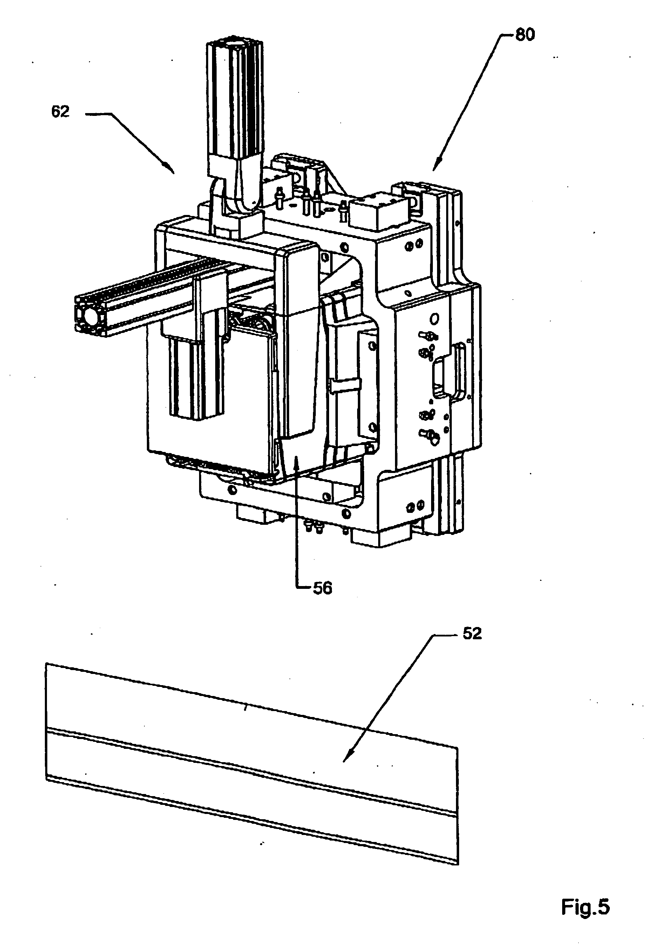

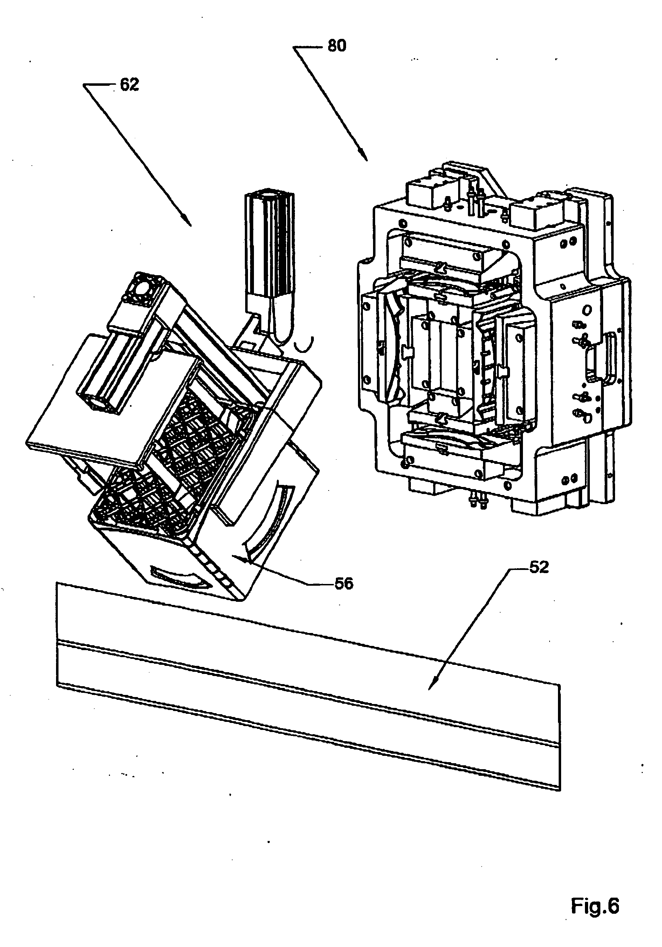

Anhand der nachfolgenden Beschreibung der Figuren 1 bis 12 sollen bevorzugte Ausgestaltungen bzw. Anordnungen und Ausschnitte von Anlagen zum Spritzen von Formteilen bzw. zum Umspritzen von Abschnitten von Formteilen bzw. Anspritzen von Abschnitten von Formteilen erläutert werden. Dabei wird aus Gründen der Vereinfachung von einem Flaschenkasten als Formteil ausgegangen, ohne dass hierdurch die erfindungsgemäße Lehre eingeschränkt werden soll. Als Formteil kann jeder Gegenstand aus einem geeigneten Material benutzt werden, an den ein Abschnitt angespritzt bzw. ein Abschnitt umspritzt werden kann. Dabei wird grundsätzlich beim Anspritzen eines Abschnitts ein Abschnitt des Formteils selbst zumindest abschnittsweise umspritzt. Selbstverständlich bestünde auch die Möglichkeit, sofern dies von den Materialien einerseits und von den Herstellungsbedingungen und Produktionsanforderungen andererseits gegeben ist, den Abschnitt an das Formteil im Stoß zu verbinden.

Als Formteile kommen insbesondere auch Kunststoffteile der Kraftfahrzeugindustrie wie Radlaufschalen oder Kraftfahrzeugunterbodenverkleidungen in Frage, um nur beispielhaft einige Gegenstände zu nennen.

Auch wird nachstehend die Erfindung anhand des Umspritzens eines Griffs eines Flaschenkastens erläutert, ohne dass dies als Einschränkung der Erfindung zu verstehen ist. Vielmehr gelten gleiche Erläuterungen für das Anspritzen eines Abschnitts an ein Formteil wie Flaschenkasten.

Der Fig. 1 ist ein Ausschnitt einer Anlage 10 zum Umspritzen eines Griffs 12 eines Kastens 14 zu entnehmen, der entlang einer Transportbahn 16, die durch ein Förderband gebildet sein kann, transportiert und sodann mittels einer Handhabungseinrichtung 18 in ein Spritzgießwerkzeug 20 eingesetzt, in dem der Griff 12 umspritzt wird.

Bei dem Griff 12 kann es sich um einen solchen handeln, der in einer Seitenwandung des Kastens 14 vorhanden ist, aber auch um einen Mittelhandgriff handeln.

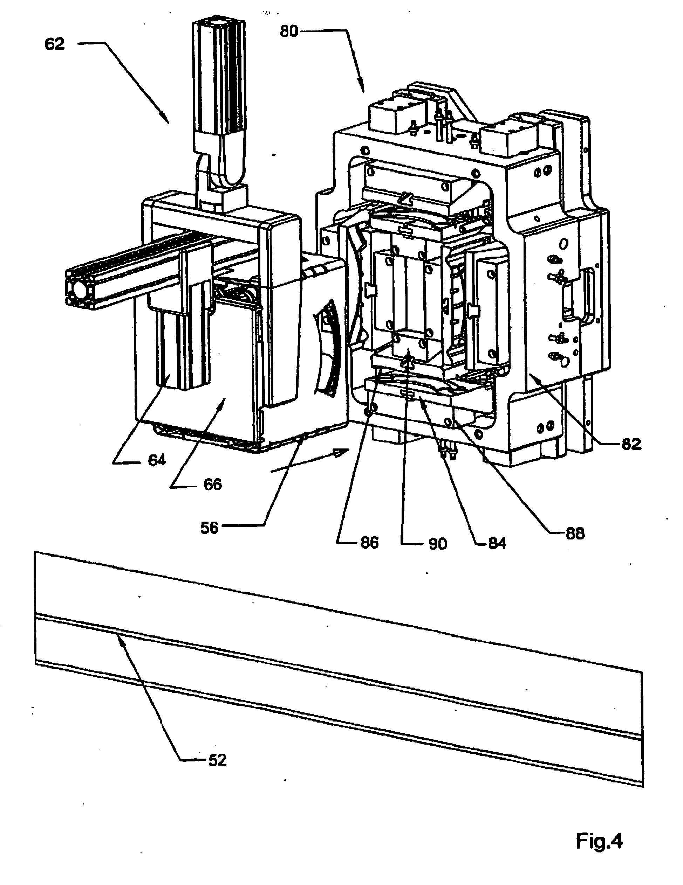

Das Spritzgießwerkzeug 20 ist mit einem Extruder 22 verbunden, über den in bekannter Weise fließfähiger thermoplastischer Kunststoff dem Spritzgießwerkzeug 20 bzw. in diesem vorhandenen Düsen zugeführt wird. Dabei besteht erfindungsgemäß das Spritzgießwerkzeug 20 allein aus einem Düsenteil, ohne dass das nach dem Stand der Technik erforderliche gesonderte Schließteil erforderlich ist. Somit wird die Zuhaltung von Formbacken, die einen Hohlraum begrenzen, in dem ein Abschnitt des Kastens, also im Ausführungsbeispiel ein Griff eingebracht wird, um sodann umspritzt zu werden, über Elemente realisiert, die vom Düsenteil selbst ausgehen. Dies wird an Hand der Fig. 4 bis 14 näher erläutert.

Die Einheit bestehend aus dem Spritzgießwerkzeug 20 und dem Extruder 22 kann hierdurch kompakt aufgebaut werden, so dass ein Einsatz an gewünschten Orten problemlos erfolgen kann, es also nicht zwingend erforderlich ist, dass das Spritzgießwerkzeug 20 dort zum Einsatz gelangt, wo der Kasten selbst gespritzt wird.

Hierdurch besteht die Möglichkeit, dass zum Beispiel Kästen in einer Flaschenabfüllanlage, von der aus die Flaschen in die Kästen eingesetzt werden, umspritzt werden können, so dass auch ein nachträgliches Umspritzen von bereits im Einsatz befindlichen Kästen möglich ist.

Insbesondere ist hierdurch die Möglichkeit gegeben, dass das zu umspritzende bzw. anzuspritzende Formteil in erheblichem Umfang über das Düsenteil vorstehen kann, da eine Behinderung durch ein Schließteil nicht gegeben ist. Auch kann ein problemloses Entfernen des Formteils aus dem Spritzgießwerkzeug 20 erfolgen, da erwähntermaßen ein Schließteil nicht zuvor von dem Düsenteil beabstandet werden muss, um das Formteil aus dem Spritzgießwerkzeug herausnehmen zu können.

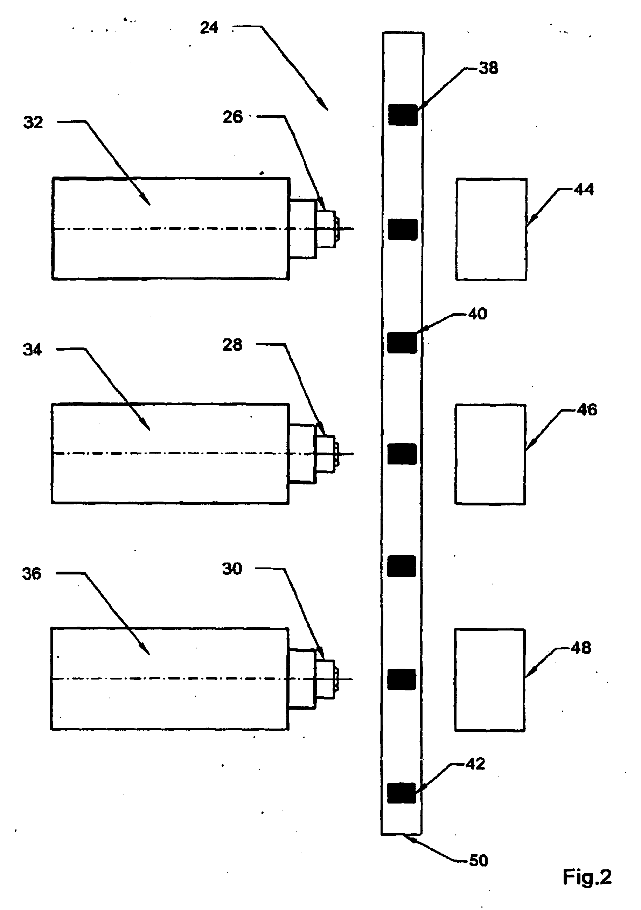

Der Fig. 2 ist eine Draufsicht auf eine Anlage 24 zu entnehmen, die mehrere Spritzgießwerkzeuge 26, 28, 30 mit zugeordneten Extrudern 32, 34, 36 umfasst, mit denen Kästen 38, 40, 42 im erforderlichen Umfang umspritzt werden sollen. Über Handhabungseinrichtungen 44, 46, 48 werden die Kästen 38, 40, 42 in die Werkzeuge 26, 28, 30 eingesetzt bzw. diesen entnommen. Hierzu werden die Kästen 38, 40, 42 über ein Förderband 50 in die erforderliche Position zwischen der jeweiligen Handhabungseinrichtung 44, 46, 48 und dem zugeordneten Werkzeug 26, 28, 30 bewegt.

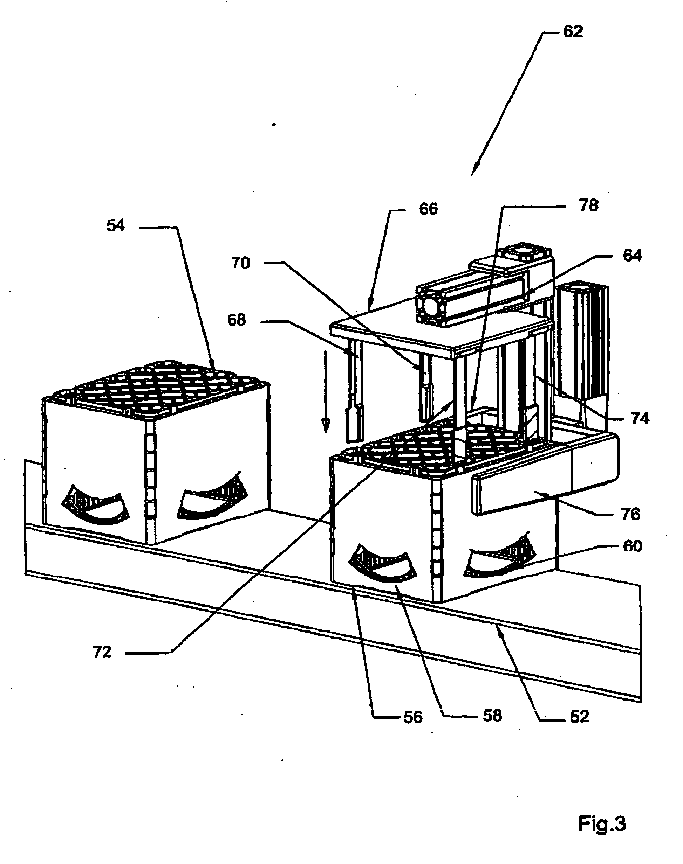

Der Fig. 3 ist ein Detail der Anlage 10 bzw. 24 zu entnehmen. Man erkennt auf einem Förderband 52 angeordnete Kästen 54, 56, die umspritzt werden sollen. Dabei können die Außengriffe 58, 60, nicht dargestellte Mittelhandgriffe oder auch Wandabschnitte wie insbesondere Innenwandabschnitte umspritzt werden.

Damit der jeweilige Kasten 54, 56 in ein Spritzgießwerkzeug eingesetzt wird, ist eine Handhabungseinrichtung 62 vorgesehen, die von einem verschwenkbaren Arm 64 ausgehend eine Basisplatte 66 mit von diesem ausgehende Stützholmen 68, 70, 72, 74 umfasst, die in die Eckholme des Kastens einsetzbar sind. Ferner weist die Handhabungseinrichtung 62 zueinander verstellbare Seitenarme 76, 78 auf, um den Kasten 56 seitlich zu erfassen.

Sobald die Holme 68, 72, 74 in die Eckholme des Kastens 56 eingefahren sind, wird der Arm 64 derart verschwenkt, dass der Kasten 56 mit seiner offenen Seite auf ein Werkzeug 80 ausgerichtet und in dieses eingesetzt wird. Das Werkzeug 80 weist weitgehend einen klassischen Aufbau mit einem Formenträger 82 sowie Formbacken auf, zwischen denen ein Abschnitt des Kastens 46 einbringbar ist, um bereichsweise den zu umspritzenden Abschnitt von einem Hohlraum zu umgeben, in den zum Umspritzen fließfähiger thermoplastischer Kunststoff über eine nicht dargestellte Düse eingespritzt wird. Rein beispielhaft werden zwei entsprechende Formbacken in Fig. 4 mit dem Bezugszeichen 84, 86 gekennzeichnet.

Um die Formbacken 84, 86 zu schließen und zuzuhalten bzw. zu öffnen, also voneinander weg zu bewegen, wirken die Formbacken 84, 86 mit Verriegelungskeilen 88, 90 zusammen, über die Formbacken 84, 86 in der Spritzstellung zugehalten werden.

Der Formenträger 82 mit den Formbacken 84, 86 und den Verriegelungskeilen 88, 90 sowie die in dem Formenträger 82 vorhandenen, jedoch nicht näher bezeichneten bzw. dargestellten Düsen stellen folglich das Düsenteil des Werkzeugs 80 dar.

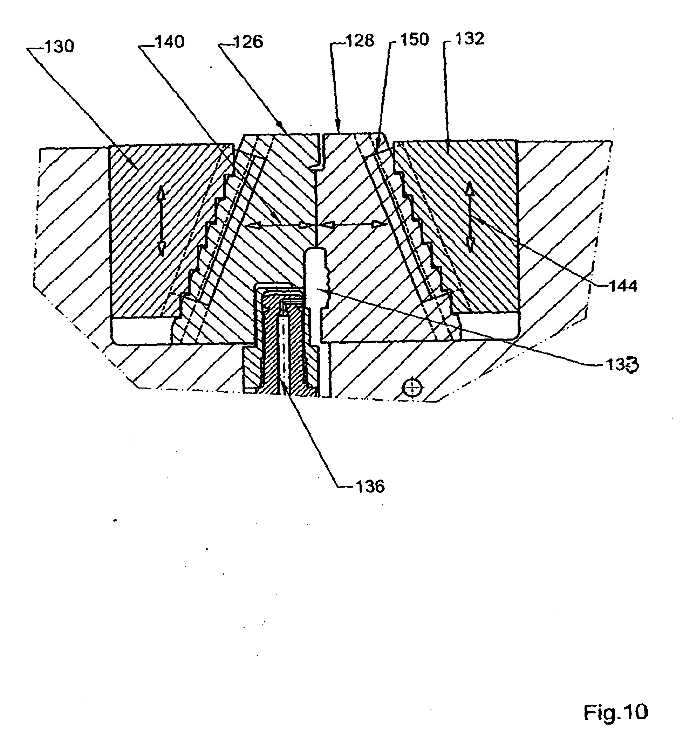

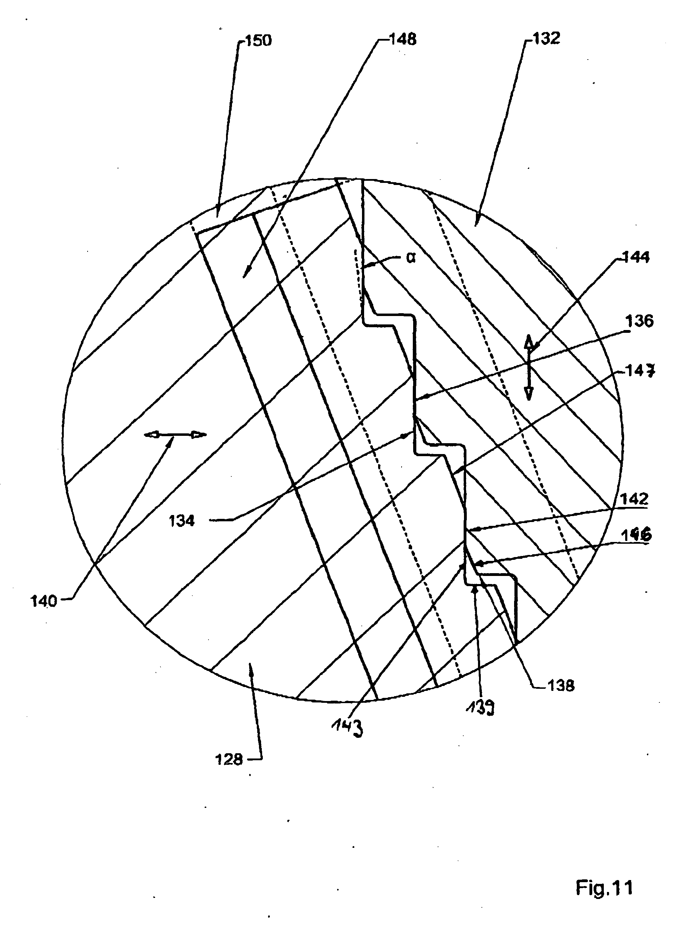

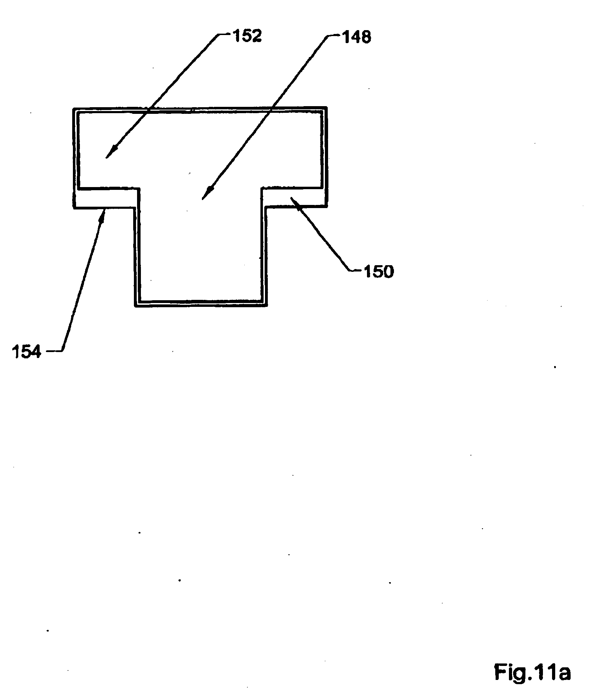

Ist nach dem Stand der Technik dem Düsenteil ein Schließteil zugeordnet, über das die Verriegelungskeile 88, 90 verriegelt werden, so ist erfindungsgemäß vorgesehen, dass ein Verriegeln ohne ein Schließteil erfolgt, wodurch sich eine überaus kompakte Baueinheit für das Werkzeug 80 ergibt. Das Verriegeln oder besser gesagt das Zuhalten der Formbacken 84, 86 wird dabei technisch dadurch realisiert, dass die Verriegelungskeile 88, 90 in der Spritzstellung, also bei geschlossenen Formbacken 84, 86 selbsthemmend außenseitig an den Formbacken 84, 86 anliegen, wie im Zusammenhang mit den Figuren 10 und 11 näher erläutert wird.

Nach Umspritzen des oder der Abschnitte des Kastens 56 und nach Öffnen der Formbacken 84, 86, also Auseinanderfahren dieser durch Verstellen der Verriegelungskeile 88, 90 senkrecht zu der von dem Formenträger 82 aufgespannten Ebene wird der Kasten 56 aus dem Werkzeug 80 über die Handhabungseinrichtung 62 entnommen, die die Funktion der Auswerfereinheit übernimmt. Sodann wird der Kasten 56 auf das Förderband 52 zurückgestellt, um anschließend den nachfolgenden Kasten, also gemäß der Darstellung in Fig. 3 den Kasten 54 in das Werkzeug 80 einzusetzen.

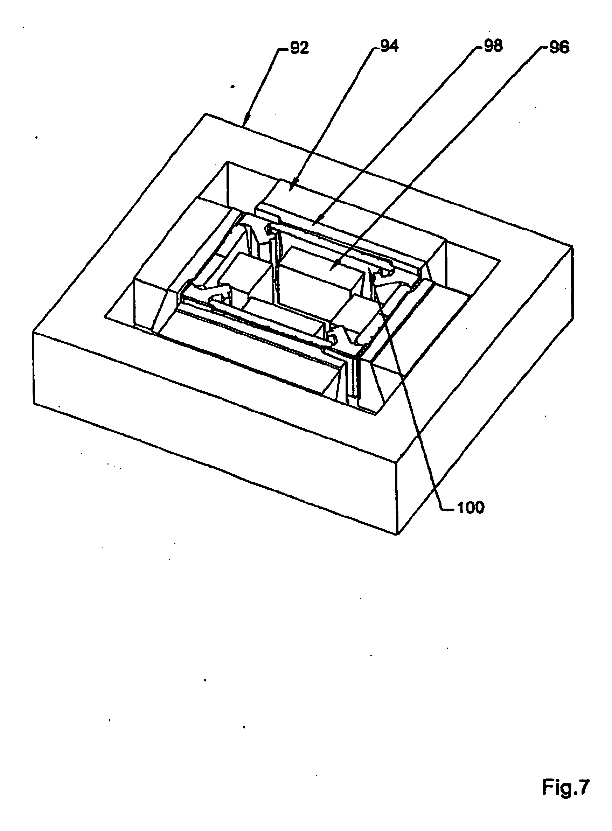

Der Fig. 7 ist in Prinzipdarstellung ein Ausschnitt eines Spritzgießwerkzeuges zu entnehmen, um Innenwandbereiche von Kästen zu umspritzen. Hierzu gehen von einem Formenträger 92 entsprechend der prinzipiellen Erläuterungen gemäß der Fig. 4 Formbacken und zugeordnete Verriegelungskeile aus, die beispielhaft mit den Bezugszeichen 94, 96 für die Formbacken und 98, 100 für die Verriegelungskeile bezeichnet sind. Die Formbacken 94, 96 wirken in Spritzstellung, also bei geschlossener Form, selbsthemmend mit den zugeordneten Verriegelungskeilen 98, 100 zusammen, so dass eine Verriegelung ausschließlich über das Düsenteil des Spritzgießwerkzeuges erfolgt, ohne dass es eines Schließteils bedarf.

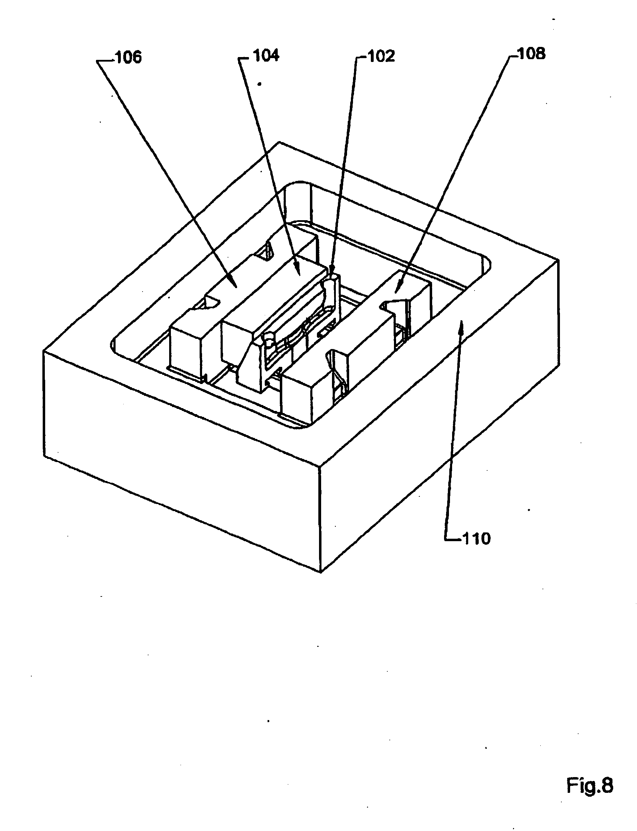

In Fig. 8 ist ein Ausschnitt eines Werkzeuges dargestellt, mit dem ein Mittelhandgriff eines Kastens umspritzt wird. Dabei sind allein zwei Formbacken 102 und diesen zugeordneten Verriegelungskeilen 104 erforderlich, die ihrerseits entlang von Führungsböcken 106, 108 verstellbar sind, um die erforderliche Bewegung senkrecht zur von einem die Formbacken 102 und die Verriegelungskeile 104 aufnehmenden Formenträger 110 aufgespannten Ebene zum Öffnen bzw. Schließen und Zuhalten der Formbacken 102 verstellen zu können.

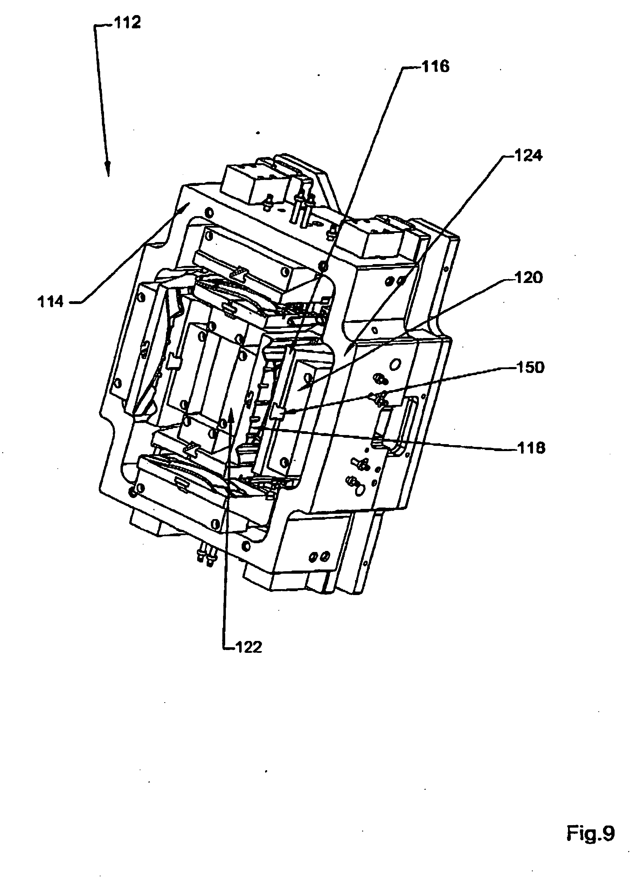

In der Fig. 9 ist rein prinzipiell ein Werkzeug 112 dargestellt, das ebenfalls ausschließlich ein Düsenteil umfasst, in dem in den Seitenwandungen eines Kastens vorhandene Griffe umspritzt werden sollen. Das Werkzeug 112, also das Düsenteil, umfasst einen Formenträger 114 mit senkrecht zu der vor diesem aufgespannten Ebene verstellbaren Verriegelungskeilen, über die die Handgriffe bzw. sich an diese anschließende Bereiche des Kastens aufnehmenden Formbacken verstellbar sind.

Beispielhaft sind zwei einander zugeordnete Formbacken mit den Bezugszeichen 116, 118 und die entsprechenden diese führenden und zuhaltenden Verriegelungskeile mit den Bezugszeichen 120, 122 gekennzeichnet. Die Führung der Verriegelungskeile 120 übernimmt dabei ein Außenwandabschnitt des Formenträgers, also in Bezug auf den Verriegelungskeil 120 der rechte Wandabschnitt 124 des Formenträgers 114. Die inneren Verriegelungskeile 122 werden über nicht dargestellte Führungsbacken geführt, die auch Abschnitte der Bodenwandung des Formenträgers 114 sein können.

Um ohne Schließteil die Formbacken in Spritzstellung zuzuhalten, ist erfindungsgemäß ein selbsthemmendes Anliegen der Verriegelungskeile an den Formbacken gegeben, wie dies prinzipiell anhand der Fig. 10 und 11 erläutert werden soll. Andere technische Realisierungsmöglichkeiten zur Erreichung einer Selbsthemmung sind selbstverständlich gleichfalls möglich.

In der Fig. 10 ist ein Ausschnitt eines Düsenteils eines Spritzgießwerkzeuges dargestellt. Man erkennt zwei zueinander verstellbare Formbacken 126, 128 und diesen zugeordnete Verriegelungskeile 130, 132. Die Bewegungsrichtungen von den Formbacken 126, 128 bzw. den Verriegelungskeilen 130, 132 sind durch die Doppelpfeile symbolisiert. In Schließstellung, der der Fig. 10 zu entnehmen ist, liegen die Formbacken 126, 128 über eine innere Fläche aufeinander und umschließen einen Hohlraum 133, in dem ein zu umspritzender Abschnitt des Kastens 54, 56 eingebracht wird, und zwar im Ausführungsbeispiel der Fig. 10 ein Seitenhandgriff. Dabei umgibt der Hohlraum 134 den Seitenhandgriff bereichsweise beabstandet, um so verbliebenen Hohlraum mit dem über eine Düse 136 zuzuführenden thermoplastischen Kunststoff zu umspritzen. Hierbei handelt es sich insbesondere um ein im Vergleich zu dem Material des Kastens weicheres Material, um angenehme Trageigenschaften zu erzielen.

Um beim Spritzen sicherzustellen, dass die Formbacken 126, 128 nicht auseinandergedrückt werden, also die Formbacken 126, 128 verriegelt oder zugehalten werden, liegen die Verriegelungskeile 130, 132 selbsthemmend an den Außenflächen der Formbacken 126, 128 an. Dies ist dem Ausschnitt der Fig. 11 näher zu entnehmen.

In Fig. 11 ist ein Abschnitt der in Fig. 10 rechts dargestellten Formbacke 128 und des dieser zugeordneten Verriegelungskeils 132 dargestellt. Die Formbacke 128 und der Verriegelungskeil 132 liegen in Schließstellung über Flächen 134 und 136 selbsthemmend aufeinander, so dass beim Einspritzen des Kunststoffmaterials ein Auseinanderdrücken der Formbacken 126, 128 verhindert wird, ohne dass ein gesondertes Schließteil - wie bei üblichen Spritzgießwerkzeugen - erforderlich ist.

Um die Selbsthemmung zu realisieren, weisen die Begrenzungsflächen 134, 136 eine Art Sägezahnstruktur auf. Diese kann durch aufeinander folgende Bereiche von ersten, zweiten und dritten Abschnitten realisiert werden. So verläuft ein erster Abschnitt 138 entlang Verstellrichtung (Doppelpfeil 140) der Formbacke 128. Ein zweiter Abschnitt 142 erstreckt sich entlang Verstellrichtung (Doppelpfeil 144) des Verriegelungskeils 132. Zwischen dem ersten Abschnitt 138 und dem zweiten Abschnitt 142 verläuft ein dritter Abschnitt 146, der sich entlang einer Ebene erstreckt, die von der jeweiligen Fläche 134 bzw. 136 des Verriegelungskeils 132 bzw. der Formbacke 128 im Mittel aufgespannt wird, also dem Gesamtverlauf der Fläche 134 bzw. 136 entspricht. Es schließt sich sodann Bereiche mit entsprechenden Abschnitten 138, 142, 146 an, um die Zahnstruktur der Fläche 136 zu bilden.

Eine entsprechende Struktur weist die Fläche 134 der Formbacke 128 auf, wobei jedoch bei aufeinander liegenden Flächen 134, 136 die ersten Abschnitte 138, 139 und die dritten Abschnitte 146, 147 zueinander beabstandet verlaufen. Die zweiten Abschnitte 142, 143 liegen demgegenüber abschnittsweise aufeinander. Hierdurch wird in Schließstellung durch die zweiten Abschnitte 142, 143 eine Selbsthemmung erzielt, wobei der zweite Abschnitt 142, 143 nicht zwingend parallel zur Verstellrichtung 144 des Verriegelungskeils 132 verlaufen muss, sondern zu dieser einen Winkel α einschließen kann, der jedoch kleiner als 6°, insbesondere im Bereich zwischen 5 und 6° liegen sollte.

Der Verriegelungskeil 132 - und somit auch der Verriegelungskeil 130 - bewirkt nicht nur das Zuhalten der Formbacken 126, 128, sondern auch deren Bewegung, also das Auseinanderfahren (Doppelpfeil 140). Um dies ungeachtet der zu realisierenden Selbsthemmung zu ermöglichen, greift der Verriegelungskeil 132 mit einem im Schnitt T-förmigen Mitnehmer 148 in eine entsprechende im Schnitt T-förmige Ausnehmungen 150 der Formbacke 128 ein, wie dem Ausschnitt in Fig. 11a zu entnehmen ist. Dabei ist der entlang der Flächen 134, 136 verlaufende T-förmige Mitnehmer 148 mit Spiel in der Aufnahme 150 angeordnet, so dass zum Öffnen des Werkzeuges zunächst ein Verstellen der Verriegelungskeile 130, 132 in Richtung des Doppelpfeils 144 erfolgt, ohne dass die Formbacken 126, 128 unmittelbar mitgenommen werden. Erst wenn der Mitnehmer 148 mit seinem Querschenkel 152 an zugeordneter verriegelungskeilseitig verlaufender Innenfläche 154 der Ausnehmung 150 anliegt, werden die Formbacken 126, 128 entlang des Doppelpfeils 140 bewegt, wodurch die Form geöffnet und somit der Kasten bzw. der umspritzte Handgriff entnommen werden kann. Dabei ist der Mitnehmer 148 leistenförmig ausgebildet und erstreckt sich parallel entlang der aus den Abschnitten 138, 139, 142, 143, 146, 147 gemittelten Flächen 134, 136.

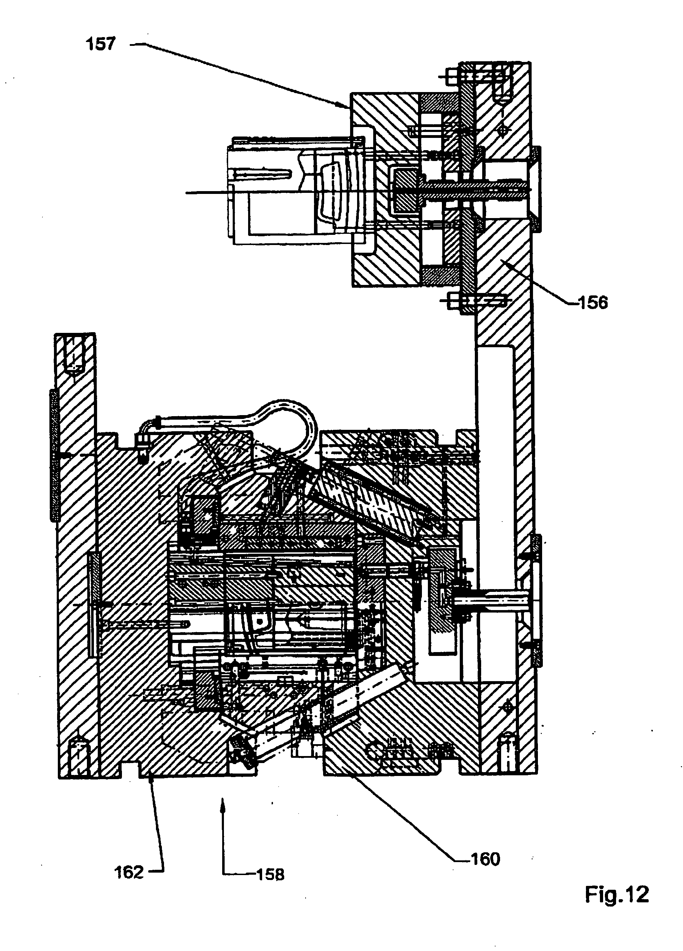

Gemäß Fig. 12 geht von einer Halterplatte 156 nicht nur ein Werkzeug aus, wie dies zuvor erläutert worden ist, um einen Abschnitt eines Kastens zu umspritzen, sondern zusätzlich ist ein zweites Spritzgießwerkzeug 158 bestehend aus einem Düsenteil 160 und einem Schließteil 162 vorhanden, mit dem der Kasten selbst gespritzt wird. Nach dem Spritzen des Kastens und dem Öffnen des Werkzeuges wird der Kasten mittels einer nicht dargestellten Handhabungseinrichtung in das Werkzeug 157 eingesetzt, um zum Beispiel einen Mittelhandgriff zu umspritzen. Das zweite Werkzeug 158 kann dabei eine übliche Konstruktion aufweisen, um Kästen zu spritzen, so dass es eines weiteren Eingehens nicht bedarf.

## Patentansprüche

1. Spritzgießwerkzeug (20, 80, 112) mit einem Düsenteil (200), das zumindest zwei relativ zueinander verstellbare Formbacken (126, 128) umfasst, die in Spritzstellung einen Hohlraum (133) begrenzen, in dem ein Spritzkanal mündet, sowie zumindest ein mit zumindest einer auf dem Düsenteil verstellbar angeordneten Formbacke wechselwirkendes Schließelement (130, 132) zum Zuhalten der Formbacken in der Spritzstellung, wobei das zumindest eine Schließelement (130, 132) von dem Düsenteil ausgeht und zu diesem verstellbar ausgebildet ist und das Schließelement die zumindest eine Formbacke (126, 128) in ihrer Spritzstellung verriegelt,
**dadurch gekennzeichnet,**
**dass** zum Öffnen bzw. Schließen des Formhohlraums (133) zumindest die eine Formbacke (126, 128) mit dem zumindest einen Schließelement in Form eines Verriegelungskeils (130, 132) wechselwirkt und die Formbacke (126, 128) und der Verriegelungskeil (130, 132) über geneigt zum Verstellweg (144) des Verriegelungskeils verlaufende strukturierte Flächen (134, 136) sägezahnförmiger Geometrie in Schließstellung kraft- und formschlüssig verbunden sind.

2. Spritzgießwerkzeug nach Anspruch 1,
**dadurch gekennzeichnet,**
**dass** der Formhohlraum (133) von zumindest zwei Formbacken (126, 128) begrenzt ist und dass jede Formbacke mit zumindest einem Schließelement in Form des Verriegelungskeils (130, 132) wechselwirkt.

3. Spritzgießwerkzeug nach Anspruch 1 oder 2,
**dadurch gekennzeichnet,**
**dass** die Fläche (134, 136) mehrere zumindest einen ersten, einen zweiten und einen dritten Abschnitt (138, 139, 142, 143, 146, 147) umfassende Bereiche aufweist, dass der erste Abschnitt (138, 139) sich quer zum Verstellweg (144) des Verriegelungskeils (132), der zweite Abschnitt (142, 143) sich in Richtung des Verstellwegs des Verriegelungskeils und der diese verbindende dritte Abschnitt (146, 147) entlang von von der Fläche (134, 136) aufgespannter Ebene erstrecken, wobei der zweite Abschnitt (142, 143) parallel zum Verstellweg (144) des Verriegelungskeils (132) oder unter einem Winkel α mit insbesondere α ≤ 6°, vorzugsweise 5° ≤ α ≤ 6° zum Verstellweg (144) verläuft.

4. Spritzgießwerkzeug nach zumindest einem der vorhergehenden Ansprüche,
**dadurch gekennzeichnet,**
**dass** von dem Verriegelungskeil (132) zumindest ein in die Formbacke (128) eingreifender Mitnehmer (148) ausgeht, wobei zum Entriegeln der Formbacke der Verriegelungskeil zu dieser mit Spiel verstellbar ist, insbesondere von dem Verriegelungskeil (132) ein entlang dessen mit der Formbacke (128) wechselwirkender Fläche (134, 136) verlaufender im Schnitt T-förmiger Mitnehmer (148) ausgeht, dessen Querschenkel (152) mit Spiel in eine in Längsrichtung der mit dem Verriegelungskeil wechselwirkenden Fläche verlaufende Aussparung (150) eingreift.

5. Spritzgießwerkzeug nach zumindest einem der Ansprüche 1 bis 4,
**dadurch gekennzeichnet,**
**dass** die Formbacken (126, 128) von einem Formträger des Spritzgießwerkzeuges ausgehen und dass das zumindest eine Schließelement (130, 132) verstellbar, insbesondere über einen Druckzylinder verstellbar mit dem Formträger verbunden ist.

6. Verfahren zum Anspritzen eines Abschnitts an ein Formteil und/oder Umspritzen eines Abschnitts eines Formteil durch Spritzgießen, wobei das Formteil abschnittsweise in einen von zueinander verstellbaren von einem Düsenteil eines Spritzgießwerkzeuges nach zumindest einem der Ansprüche 1-5 ausgehenden und relativ zueinander verstellbare Formbacken umgebenen Hohlraum eingebracht wird, in den nach Schließen der Formbacken in der Spritzstellung fließfähiges Material gespritzt wird, wobei zumindest eine der Formbacken mittels zumindest eines von dem Düsenteil ausgehenden Schließelements durch Verstellen dieses zu der zumindest einen Formbacke in ihrer Spritzstellung verriegelt wird, wobei
die zumindest eine Formbacke mit dem zumindest einen Schließelement durch formschlüssiges Eingreifen des Verriegelungselementes in die Formbacke verriegelt wird.

## Claims

1. Injection moulding tool (20, 80, 112) including a nozzle part (200), which includes at least two mould sections (126, 128), which are adjustable one relative to the other and, when in the injection position, define a hollow cavity (133) in which an injection channel opens out, as well as at least one closing element (130, 132), which interacts with at least one mould section that is disposed on the nozzle part so as to be adjustable for holding the mould sections in the injection position, wherein the at least one closing element (130, 132) extends from the nozzle part and is adjustable relative to the said nozzle part and the closing element locks the at least one mould section (126, 128) in its injection position, **characterised in that** to open or respectively close the mould cavity (133) at least the one mould section (126, 128) interacts with the at least one closing element in the form of a locking wedge (130, 132) and the mould section (126, 128) and the locking wedge (130, 132) are connected in the closed position in a positive and force-fitting manner via structured surfaces (134, 136) that are of saw-toothed geometry and extend inclinedly towards the adjustment path (144) of the locking wedge.

2. Injection moulding tool according to claim 1, **characterised in that** the mould cavity (133) is defined by at least two mould sections (126, 128) and **in that** each mould section interacts with at least one closing element in the form of the locking wedge (130, 132).

3. Injection moulding tool according to claim 1 or 2, **characterised in that** the surface (134, 136) includes a plurality of regions that include at least a first, a second and a third section (138, 139, 142, 143, 146, 147), **in that** the first section (138, 139) extends transversely relative to the adjustment path (144) of the locking wedge (132), the second section (142, 143) extends in the direction of the adjustment path of the locking wedge and the third section (146, 147), which connects the said sections, extends along the plane spanned by the surface (134, 136), wherein the second section (142, 143) extends parallel to the adjustment path (144) of the locking wedge (132) or at an angle α, where more especially α ≤ 6°, preferably 5° ≤ α ≤ 6°, relative to the adjustment path (144).

4. Injection moulding tool according to at least one of the preceding claims, **characterised in that** at least one entrainment means (148), which engages the mould section (128), extends from the locking wedge (132), wherein the locking wedge is adjustable with play relative to the mould section for unlocking the said mould section, more especially an entrainment means (148), which is T-shaped in cross-section, extends along the surface (134, 136) of the said locking wedge interacting with the mould section (128), extends from the locking wedge (132), the cross portion (152) of the said entrainment means (148) engaging with play in a recess (150), which extends in the longitudinal direction of the surface interacting with the locking wedge.

5. Injection moulding tool according to at least one of claims 1 to 4, **characterised in that** the mould sections (126, 128) extend from a mould carrier of the injection moulding tool and **in that** the t least one closing element (130, 132) is connected to the mould carrier so as to be adjustable, more especially is connected to the mould carrier so as to be adjustable by means of a pressure cylinder.

6. Method for spraying a section onto a moulded part and/or for spraying around a section of a moulded part by means of injection moulding, wherein the moulded part is introduced in a sectional manner into a cavity, which is surrounded by mould sections, which are adjustable one towards the other, extend from a nozzle part of an injection moulding tool according to at least one of claims 1 - 5 and are adjustable one relative to the other, flowable material being injected into the said cavity in the injection position once the mould sections have been closed, wherein at least one of the mould sections is locked in its injection position by means of at least one of the closing elements that extend from the nozzle part by adjusting the same relative to the at least one mould section, wherein the at least one mould section is locked by the at least one closing element by means of positive engagement of the locking element in the mould section.

## Revendications

1. Outil de moulage par injection (20,80,112) comportant une partie de buse (200) ayant au moins deux mâchoires de moules (126,128) réglables l'une par rapport à l'autre, et en position d'injection ils délimitent une cavité (133) dans laquelle débouche un canal d'injection, ainsi qu'au moins un élément de fermeture (130,132) coopérant avec au moins une mâchoire de moule (126, 128) installée de manière réglable sur la partie de buse pour maintenir fermées les mâchoires de moule (126,128) en position d'injection,
au moins cet élément de fermeture (130,132) réalisé à partir de la pièce de buse est réglable par rapport à celle-ci, et
l'élément de fermeture verrouille au moins une mâchoire de moule (126,128) dans sa position d'injection,
**caractérisé en ce que**
pour ouvrir ou fermer la cavité de moule (133), au moins une mâchoire de moule (126,128) coopère avec au moins l'élément de fermeture sous la forme d'un coin de verrouillage (130,132) et la mâchoire de moule (126,128) et le coin de verrouillage (130,132) sont reliés par une liaison par la forme, en position de fermeture, par des surfaces (134,136) à géométrie en forme de dents de scie, inclinées par rapport à la course de réglage (144) du coin de verrouillage.

2. Outil d'injection selon la revendication 1,
**caractérisé en ce que**
la cavité de moule (133) est délimitée par au moins deux mâchoires de moule (126,128) et chaque mâchoire de moule coopère avec au moins un élément de fermeture sous la forme d'un coin de verrouillage (130,132).

3. Outil d'injection selon la revendication 1 ou la revendication 2,
**caractérisé en ce que**
la surface (134,136) comporte plusieurs zones ayant au moins un premier, un second et un troisième segment (138,139,142,143,146,147),
le premier segment (138,139) s'étendant transversalement à la course de réglage (144) du premier coin de verrouillage (132), le second segment (142,143) s'étend dans la direction de la course de réglage du point de verrouillage et le troisième segment (146,147) qui les relie, ,s'étend dans le plan sous-tendu par la surface (134,136),
le second segment (142,143) étant parallèle à la course de réglage (144) du coin de verrouillage (132) ou fait un certain angle α et notamment α ≤ 6° de préférence 5° ≤ α ≤ 6° par rapport au chemin de réglage (144).

4. Outil d'injection selon au moins l'une des revendications précédentes,
**caractérisé en ce qu'**
du coin de verrouillage 132 au moins l'organe d'entraînement (148) vient prendre dans la mâchoire de moule (128),
et pour déverrouiller la mâchoire de moule, on règle le coin de verrouillage par rapport à celle-ci avec du jeu, notamment **en ce que** partant du coin de verrouillage (132), le long de sa surface (134,136) coopérant avec la mâchoire de moule (128) il y a un organe d'entraînement (148) à section en forme de T dont la branche transversale (152) pénètre avec du jeu dans une cavité (150) dirigée dans la direction longitudinale de la surface coopérant avec le coin de verrouillage.

5. Outil d'injection selon au moins l'une des revendications 1 à 4,
**caractérisé en ce que**
les mâchoires de moule (126,128) sont issues du support de moule de l'outil d'injection et au moins un élément de fermeture (130,132) est relié de manière réglable au support de moule notamment par un vérin.

6. Procédé pour surmouler par injection un segment d'une pièce de forme et/ou pour surmouler un segment d'une pièce de forme par injection, la pièce de forme étant placée par segment dans une cavité entourée de mâchoires de moule, réglables l'une par rapport à l'autre et réglables par rapport à une partie de buse d'un outil d'injection selon au moins l'une des revendications 1 à 5 et dans cette cavité, après fermeture des mâchoires de moule, on injecte la matière susceptible de fluer dans cette position d'injection, au moins l'une des mâchoires de moule étant verrouillée par l'intermédiaire d'un élément de fermeture partant de la partie de buse, par réglage de celle-ci par rapport au moins à une mâchoire de moule,
au moins une mâchoire de moule étant verrouillée avec au moins un élément de fermeture par une imbrication par la forme de l'élément de verrouillage dans la mâchoire de moule.
